# FASCICULE DE BREVET EUROPEEN

(11) **EP 3 041 740 B1**
(45) Date de publication et mention de la délivrance du brevet: **31.07.2019**
(21) Numéro de dépôt: 14786978.8
(22) Date de dépôt: 25.08.2014
(51) Int. Cl.: B64D 27/26, F01D 25/24

(54) **STRUCTURE DE CARTER A CALES DE LIAISON.**
GEHÄUSESTRUKTUR MIT VERBINDUNGSELEMENTEN
SEGMENTED CASING WITH INTERCONNECTION DEVICES

(30) Priorité: 04.09.2013 FR 1358476
(43) Date de publication de la demande: 13.07.2016
(73) Titulaire: Safran Aircraft Engines, 75015 Paris (FR)
(72) Inventeur: BELJAMBE, Ceddric, 77550 Moissy-Cramayel Cedex (FR); ROBIN, Noël, 77550 Moissy-Cramayel Cedex (FR)
(74) Mandataire: David, Alain
(86) Numéro de dépôt international: PCT/FR2014/052119
(87) Numéro de publication internationale: WO 2015/033040

(56) Documents cités:
- EP-A2- 2 072 397
- WO-A1-2012/013889
- WO-A2-2010/007220

## Description

### Arrière-plan de l'invention

La présente invention se rapporte au domaine des moteurs d'aéronef, par exemple des turboréacteurs, et elle concerne plus particulièrement une structure de carter interposée entre le moteur et la nacelle. L'état de l'art est illustré par le document WO-A2-2010/007220.

Comme il est connu, une telle structure doit assurer, outre la jonction mécanique entre le moteur et la nacelle :
- la continuité de la veine aérodynamique du flux secondaire ;
- le passage et le maintien des servitudes (électrique, mécanique, hydraulique) entre les différents composants du moteur (core, fan, etc...) et la nacelle de ce moteur ;
- la protection au feu entre les différents compartiments du moteur et le flux secondaire ;
- l'accessibilité aux équipements et aux servitudes pour la maintenance.

Cette structure de carter est constituée d'un cadre cylindrique sectorisé (ou secteurs de virole) de faible largeur (de l'ordre de quelques centaines de millimètres selon l'axe moteur) devant permettre un accès aisé aux équipements qu'il recouvre (par exemple les bielles de reprise de poussée ou encore différents vérins d'actionnement de servitudes) dès l'ouverture de la nacelle et d'au moins un bras radial disposé autour de ce cadre. Classiquement, le cadre supporte également des écopes du système de déchargement d'air (booster VBV).

Les temps de maintenance devant être optimisés, le cadre apparait donc comme un obstacle à l'accès aux équipements placés en dessous de lui et qui doivent pouvoir être déposés, changés, vérifiés... sous aile dès l'ouverture de la nacelle, en prenant en compte le temps de montage et démontage du cadre lui-même, dans un temps limité et dépendant de l'application.

Il existe donc un besoin d'une structure de carter qui permette d'assurer un accès facilité à ces équipements (c'est-à-dire compatible avec les temps de maintenance au sol autorisés) tout en réalisant l'ensemble des fonctions précitées et notamment une réduction des perturbations dans la veine aérodynamique.

### Objet et résumé de l'invention

La présente invention a donc pour but principal de pallier de tels inconvénients en proposant une structure de carter interposée entre le moteur et la nacelle d'un aéronef comportant :
une virole entourant le moteur et comprenant une pluralité de secteurs, au moins un bras radial assurant la liaison à la nacelle,
une pluralité de moyens de fixation pour solidariser ladite pluralité de secteurs de virole entre eux ou avec ledit au moins un bras radial,
caractérisée en ce que ladite pluralité de moyens de fixation comporte une pluralité de cales de liaison munies chacune de deux séries parallèles de perçages destinés à recevoir respectivement deux séries de vis à tête traversant pour une première série un ensemble correspondant d'orifices d'un secteur de virole et pour une seconde série un ensemble correspondant d'orifices d'un secteur de virole adjacent ou d'un bras radial adjacent, ladite cale de liaison présentant une forme en pont avec une partie supérieure destinée à recevoir lesdites deux séries parallèles de perçages et prolongée par deux parties latérales terminées chacune par un rebord destiné à former un support pour une partie latérale correspondante dudit secteur de virole ou dudit bras radial.

Ainsi, la présence des deux rangées parallèles de vis assurant chacune la fixation d'un secteur de virole permet un démontage d'un secteur donné, indépendamment des secteurs voisins, pour accéder aux équipements ou servitudes qu'il recouvre.

De préférence, lesdits orifices desdits secteurs de virole ou desdits bras radiaux comportent à leur entrée des chanfreins pour s'adapter aux têtes desdites vis à tête et ainsi permettre leur montage à effleurement.

Avantageusement, la longueur de ladite cale de liaison correspond à la largeur de ladite virole.

De préférence, ladite cale de liaison est traversée sur toute sa longueur par une rainure centrale destinée à recevoir un joint d'étanchéité et qui permet, en mettant bord à bord lesdits secteurs de virole adjacents ou le bras radial adjacent audit secteur de virole, de garantir une étanchéité aérodynamique entre lesdits secteurs de virole ou lesdits bras radiaux.

L'invention concerne également tout moteur d'aéronef comportant une structure de carter telle que précitée.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif et sur lesquels :
- la figure 1 est une vue d'une structure de carter interposée entre le moteur et la nacelle d'un aéronef conforme à l'invention ;
- la figure 2 est une vue de la structure de carter de la figure 1, un secteur de virole étant enlevé ; et
- la figure 3 est un détail de la figure 2 montrant la cale de liaison.

### Description détaillée d'un mode de réalisation

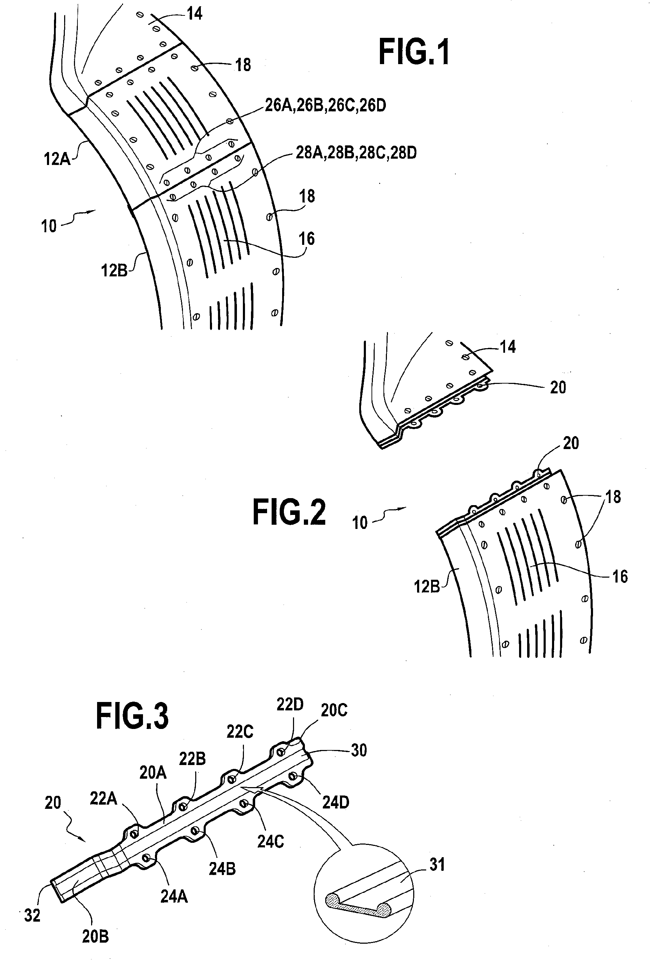

Les figures 1 et 2 représentent respectivement montée et partiellement démontée une partie de la structure de carter 10 interposée entre le moteur et la nacelle d'un aéronef, typiquement un turboréacteur, qui se présente sous la forme d'une virole sectorisée (dont seuls deux secteurs 12A, 12B sont représentés) reliée par au moins un bras radial de support du carter de la nacelle (par exemple le bras radial 14). Selon la circonférence du moteur, la position des équipements comme les bielles de reprise de poussée, les vérins actionnant les VBV ou VSV par exemple, la virole peut comporter jusqu'à huit secteurs adjacents dissociables les uns des autres et montés entre plusieurs bras radiaux régulièrement répartis. Chaque secteur de virole est percé d'ouvertures 16 faisant fonction d'écopes pour un des systèmes de déchargement d'air de l'aéronef (par exemple le système VBV ou variable bleed valve). Les secteurs de virole sont maintenus radialement avec le moyeu de carter (non représenté) par l'intermédiaire d'un système vis-écrou traversant des logements 18 de ces secteurs de virole.

Selon l'invention, les secteurs de viroles sont solidarisés entre eux ou avec les bras radiaux par des moyens de fixation comprenant une cale de liaison 20 qui assure leur maintien respectif tout en assurant l'étanchéité avec la veine secondaire.

Cette cale de liaison 20 illustrée plus en détail à la figure 3 dont la longueur (selon l'axe moteur) correspond à la largeur des secteurs de virole présente une forme en pont avec une partie supérieure 20A (par opposition aux parties latérales 20B, 20C) munie de deux séries parallèles de perçages 22A, 22B, 22C, 22D ; 24A, 24B, 24C, 24D destinés à recevoir des vis, typiquement des vis à tête (non représentées). Par exemple, pour une virole de 350 mm de largeur (selon l'axe moteur), on peut choisir une cale percée de deux fois 4 trous, d'environ 40 mm de largeur et de quelques millimètres d'épaisseur.

Les deux séries parallèles de perçages sont destinés à recevoir respectivement deux séries de vis à tête traversant pour une première série un ensemble correspondant d'orifices 26A, 26B, 26C, 26D d'un secteur de virole 12A et pour une seconde série un ensemble correspondant d'orifices 28A, 28B, 28C, 28D d'un secteur de virole adjacent 12B ou d'un bras radial adjacent. Les orifices des secteurs de virole ou des bras radiaux comportent avantageusement à leur entrée des chanfreins pour s'adapter aux têtes de ces vis à tête et ainsi permettre leur montage à affleurement, de sorte que la tête de chaque vis s'y positionnant exactement, elle se retrouve alors alignée avec la face supérieure de ces éléments en contact avec la veine secondaire et ne constitue donc pas un obstacle pour le flux d'air secondaire dont la continuité aérodynamique est ainsi assurée.

Ainsi, le fait d'avoir, au niveau de la cale, deux séries de perçages permet lors d'une opération de maintenance des équipements sous la virole (par exemple le contrôle périodique des bielles de reprise de poussée) un démontage rapide et facile du seul secteur recouvrant la bielle considérée, tout en continuant à maintenir la cale sur le secteur adjacent.

On notera que la cale est traversée sur toute sa longueur par une rainure centrale 30 qui permet de mettre bord à bord les secteurs adjacents ou le bras radial à solidariser et sur le fond de laquelle sera disposé un joint 31, de façon à assurer une parfaite étanchéité aérodynamique entre ces secteurs. En outre, des rebords 32 terminant chacune des parties latérales 20A, 20B forment des supports pour les parties latérales correspondantes du secteur de virole ou du bras radial à solidariser.

## Revendications

1. Structure de carter apte à assurer la jonction mécanique entre le moteur et la nacelle d'un aéronef, comportant :
une virole destinée à entourer le moteur et comprenant une pluralité de secteurs (12A, 12B),
au moins un bras radial (14) disposé autour de ladite virole et destiné à assurer la liaison avec la nacelle,
une pluralité de moyens de fixation pour solidariser ladite pluralité de secteurs de virole entre eux ou avec ledit au moins un bras radial,
**caractérisée en ce que** ladite pluralité de moyens de fixation comporte une pluralité de cales de liaison (20) munies chacune de deux séries parallèles de perçages (22A, 22B, 22C, 22D ; 24A, 24B, 24C, 24D) destinés à recevoir respectivement deux séries de vis à tête traversant pour une première série un ensemble correspondant d'orifices (26A, 26B, 26C, 26D) d'un secteur de virole et pour une seconde série un ensemble correspondant d'orifices (28A, 28B, 28C, 28D) d'un secteur de virole adjacent ou d'un bras radial adjacent, ladite cale de liaison présentant une forme en pont avec une partie supérieure (20A) destinée à recevoir lesdites deux séries parallèles de perçages et prolongée par deux parties latérales (20B, 20C) terminées chacune par un rebord destiné à former un support (32) pour une partie latérale correspondante dudit secteur de virole ou dudit bras radial.

2. Structure de carter selon la revendication 1, **caractérisée en ce que** lesdits orifices desdits secteurs de virole ou desdits bras radiaux comportent à leur entrée des chanfreins pour s'adapter aux têtes desdites vis à tête et ainsi permettre leur montage à affleurement.

3. Structure de carter selon la revendication 1 ou la revendication 2, **caractérisée en ce que** la longueur de ladite cale de liaison correspond à la largeur de ladite virole.

4. Structure de carter selon la revendication 3, **caractérisée en ce que** ladite cale de liaison est traversée sur toute sa longueur par une rainure centrale (30) destinée à recevoir un joint d'étanchéité (31) et qui permet, en mettant bord à bord lesdits secteurs de virole adjacents ou le bras radial adjacent audit secteur de virole, de garantir une étanchéité aérodynamique entre lesdits secteurs de virole ou lesdits bras radiaux.

5. Moteur d'aéronef comportant une structure de carter selon l'une quelconque des revendications 1 à 4.

## Patentansprüche

1. Gehäusekonstruktion, die geeignet ist, die mechanische Verbindung zwischen dem Triebwerk und dem Rumpf eines Flugzeugs sicherzustellen, umfassend:
einen Mantel, der dazu bestimmt ist, den Motor zu umgeben, und der eine Mehrzahl von Sektoren (12A, 12B) umfasst,
mindestens einen radialen Arm (14), der um den Mantel herum angeordnet und dazu bestimmt ist, die Verbindung mit dem Rumpf sicherzustellen,
eine Mehrzahl von Befestigungsmitteln zum Verbinden der Mehrzahl von Mantelsektoren miteinander oder mit dem mindestens einen radialen Arm,
**dadurch gekennzeichnet, dass** die Mehrzahl von Befestigungsmitteln eine Mehrzahl von Verbindungskeilen (20) umfasst, die jeweils mit zwei parallelen Reihen von Löchern (22A, 22B, 22C, 22D; 24A, 248, 24C, 24D) versehen sind, die dazu bestimmt sind, jeweils zwei Reihen von Kopfschrauben aufzunehmen, von denen eine erste Reihe durch eine entsprechende Anordnung von Löchern (26A, 26B, 26C, 26D) eines Mantelsektors und eine zweite Reihe durch eine entsprechende Anordnung von Löchern (28A, 28B, 28C, 28D) eines benachbarten Mantelsektors oder eines benachbarten radialen Arms gehen, wobei der Verbindungskeil eine Brückenform mit einem oberen Teil (20A) aufweist, der dazu bestimmt ist, die beiden parallelen Reihen von Löchern aufzunehmen, und der durch zwei Seitenteile (20B, 20C) verlängert ist, die jeweils mit einem Flansch abgeschlossen sind, der dazu bestimmt ist, eine Stütze (32) für einen entsprechenden Seitenteil des Mantelsektors oder des radialen Arms zu bilden.

2. Gehäusekonstruktion nach Anspruch 1, **dadurch gekennzeichnet, dass** die Löcher der Mantelsektoren oder der radialen Arme an ihrem Eingang Abschrägungen aufweisen, um sich den Köpfen der Kopfschrauben anzupassen und so deren bündige Montage zu ermöglichen.

3. Gehäusekonstruktion nach Anspruch 1 oder Anspruch 2, **dadurch gekennzeichnet, dass** die Länge des Verbindungskeils der Breite des Mantels entspricht.

4. Gehäusekonstruktion nach Anspruch 3, **dadurch gekennzeichnet, dass** der Verbindungskeil über seine gesamte Länge von einer zentralen Nut (30) durchzogen wird, die zur Aufnahme eines Dichtrings (31) vorgesehen ist und die es ermöglicht, eine aerodynamische Abdichtung zwischen den Mantelsektoren oder den radialen Armen zu gewährleisten, indem sie die benachbarten Mantelsektoren oder den an den Mantelsektor angrenzenden radialen Arm kantenbündig platziert.

5. Flugzeugtriebwerk mit einer Gehäusekonstruktion nach einem der Ansprüche 1 bis 4.

## Claims

1. A casing structure fitted for providing the mechanical junction between the engine and the nacelle of an aircraft, the casing structure comprising:
• a shroud destined to surround the engine and comprising a plurality of sectors (12A, 12B);
• at least one radial arm (14) arranged around said shroud and destined to provide the connection with the nacelle; and
• a plurality of fastener means for securing said plurality of shroud sectors to one another or to said at least one radial arm;
the casing structure being **characterized in that** said plurality of fastener means comprise a plurality of connection tabs (20), each provided with two parallel series of holes (22A, 22B, 22C, 22D; 24A, 24B, 24C, 24D) for receiving two respective series of headed bolts, a first series passing through a corresponding set of orifices (26A, 26B, 26C, 26D) of one shroud sector, and a second series passing through a corresponding set of orifices (28A, 28B, 28C, 28D) of an adjacent shroud sector or an adjacent radial arm, said connection tab being in the form of a bridge with a top portion (20A) for receiving said two parallel series of holes and extended by two lateral portions (20B, 20C), each terminated by a rim that is to form a support (32) for a corresponding lateral portion of said shroud sector or of said radial arm.

2. A casing structure according to claim 1, **characterized in that** said orifices of said shroud sectors or said radial arms include chamfers at their inlets in order to fit against the heads of said headed bolts and thus enable them to be mounted flush.

3. A casing structure according to claim 1 or 2, **characterized in that** the length of said connection tab corresponds to the width of said shroud.

4. A casing structure according to claim 3, **characterized in that** said connection tab has running along its entire length a central groove (30) for receiving a sealing gasket (31) that, by putting said adjacent shroud sectors or the radial arm adjacent to said shroud sector edge to edge, serves to guarantee aerodynamic airtightness between said shroud sectors or said radial arms.

5. An aeroengine including a casing structure according to any one of claims 1 to 4.
